# EUROPEAN PATENT APPLICATION

(11) **EP 4 324 365 A1**
(43) Date of publication of application: **21.02.2024**
(21) Application number: 22758414.1
(22) Date of filing: 23.02.2022
(51) Int. Cl.: A47J 43/07, A47J 43/046, A47J 43/08

(54) **VACUUM BLENDER**

(30) Priority: 12.04.2021 KR 20210046961; 26.01.2022 KR 20220011650
(71) Applicant: NUC Electronics Co., Ltd., Daegu 41548 (KR)
(72) Inventor: KIM, Jong Boo, Daegu 41573 (KR)
(74) Representative: Cabinet Beau de Loménie
(86) International application number: PCT/KR2022/002623
(87) International publication number: WO 2022/220395

(57) **Abstract**

A vacuum blender is disclosed. The vacuum blender includes: a soundproof cover defining a first space therein and comprising a soundproof cover packing allowing the first space to be switched between a vacuum state and an atmospheric pressure state; a container mounted in the first space, defining a second space for processing ingredients therein, and having at least one opening formed through an upper end thereof and allowing passage of air therethrough; an operation unit including a control knob movable between an evacuation position and a ventilation position and a relief button pressing the soundproof cover packing, and a main body coupled to the soundproof cover and including a vacuum motor evacuating the first space or the second space, wherein the container includes a relief valve opening or closing one of the openings in response to external force applied by a user and a container check valve opening or closing the other opening in response to rotation of the control knob.

## Description

### [Technical Field]

Embodiments of the present disclosure relate to a vacuum blender including a soundproof cover.

### [Background Art]

This section provides background information related to the present invention, which is not necessarily prior art.

In general, a vacuum blender is an electrical appliance for processing, for example, mixing or chopping foods, and may process foods in a container mounted on an upper side of a main body by rotating a processing member (for example, a blade) rotatably disposed in the container through torque transmission from a motor disposed in the main body to the processing member. Such a vacuum blender processes foods in a receiving space of the container, which is depressurized to a vacuum using a vacuum pump disposed in the main body. In addition, the vacuum blender can provide high processing efficiency through prevention of oxidation and bubbling of food ingredients.

### [Disclosure]

### [Technical Problem]

Embodiments of the present disclosure are conceived to solve such problems in the art and it is an aspect of the present disclosure to provide a vacuum blender in which, apart from a relief button, a control knob is formed on an upper side of a soundproof cover, thereby preventing user maloperation.

It is another aspect of the present disclosure to provide a vacuum blender in which a soundproof cover packing is provided to a soundproof cover to normally close a vent hole, thereby preventing intrusion of dust or foreign matter into the vent hole.

It is a further aspect of the present disclosure to provide a vacuum blender in which a means for releasing a soundproof cover packing is provided separately from a means for releasing a container packing, thereby facilitating user operation.

### [Technical Solution]

In accordance with one aspect of the present invention, there is provided a vacuum blender including: a soundproof cover defining a first space therein and including a soundproof cover packing switching the first space between a vacuum state and an atmospheric pressure state; a container mounted in the first space, defining a second space for processing ingredients therein, and having at least one opening formed through an upper end thereof and allowing passage of air therethrough; an operation unit including a control knob movable between an evacuation position and a ventilation position and a relief button pressing the soundproof cover packing; and a main body coupled to the soundproof cover and including a vacuum motor evacuating the first space or the second space, wherein the container includes a relief valve opening or closing one of the at least one opening in response to external force applied by a user and a container check valve opening or closing the other opening in response to rotation of the control knob.

In accordance with another aspect of the present invention, there is provided a vacuum blender including: a soundproof cover defining a first space therein and including a first packing switching the first space between a vacuum state and an atmospheric pressure state; a container mounted in the first space and defining a second space for processing ingredients therein; an operation unit including a control knob movable between an evacuation position and a ventilation position and a relief button pressing the first packing; and a main body coupled to the soundproof cover and including a vacuum motor evacuating the first space or the second space.

### [Advantageous Effects]

The vacuum blender according to the embodiments of the present disclosure can prevent user maloperation since the control knob is formed on the upper side of the soundproof cover, apart from the relief button.

In addition, the vacuum blender according to the embodiments of the present disclosure can prevent intrusion of dust or foreign matter into the vent hole since the soundproof cover packing of the soundproof cover normally closes the vent hole.

Further, the vacuum blender according to the embodiments of the present disclosure can facilitate user operation since a means for releasing the soundproof cover packing is provided separately from a means for releasing the container packing.

### [Description of Drawings]

FIG. 1 is a perspective view of a vacuum blender according to one embodiment of the present disclosure.
FIG. 2 is an exploded view of the vacuum blender according to the embodiment.
FIG. 3 is an exploded view of an operation unit according to one embodiment of the present disclosure.
FIG. 4 shows sectional views of a control knob, an upper module, and a soundproof cover according to one embodiment of the present disclosure.
FIG. 5 shows exploded views of the soundproof cover and a container according to one embodiment of the present disclosure.
FIG. 6 is a view illustrating the control knob, the upper module, and a lower module according to one embodiment of the present disclosure.
FIG. 7 is a view illustrating a valve support in a lower position according to one embodiment of the present disclosure.
FIG. 8 is a view illustrating the valve support moved to an upper position by an upper movable portion.
FIG. 9 and 10 each show a longitudinal sectional view of the vacuum blender according to the embodiment.
FIG. 11 is an exploded view of a vacuum blender according to another embodiment of the present disclosure.
FIG. 12 shows a top view and a bottom view of a soundproof cover according to another embodiment of the present disclosure.
FIG. 13 is a perspective view of the soundproof cover according to the embodiment, wherein an internal space of the soundproof cover is ventilated through activation of a relief button.
FIG. 14 is a perspective view illustrating an inside of the soundproof cover according to the embodiment.

### [Best Mode]

Hereinafter, embodiments of the present invention will be described with reference to the accompanying drawings. It should be noted that like components will be denoted by like reference numerals throughout the specification and the accompanying drawings. In addition, description of known functions and constructions which may unnecessarily obscure the subject matter of the present invention will be omitted.

It will be understood that, although the terms "first", "second", "i)", "ii)", "a)", "b)", etc. may be used herein to describe various components in embodiments of the present disclosure. These terms are only used to distinguish one element or component from another element or component, and are not to be construed as limiting the nature, order, or sequence of the corresponding components. In addition, unless stated otherwise, the terms "includes", "comprises", "including" and/or "comprising" should be interpreted as not excluding the presence of other components than those listed herein. That is, when an element is referred to as including (or comprising) a certain component, the element may further include (or comprise) other components apart from the certain component.

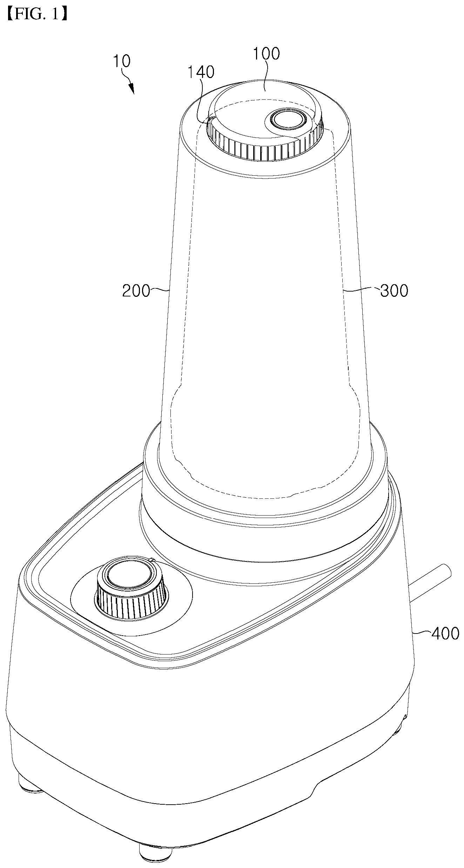

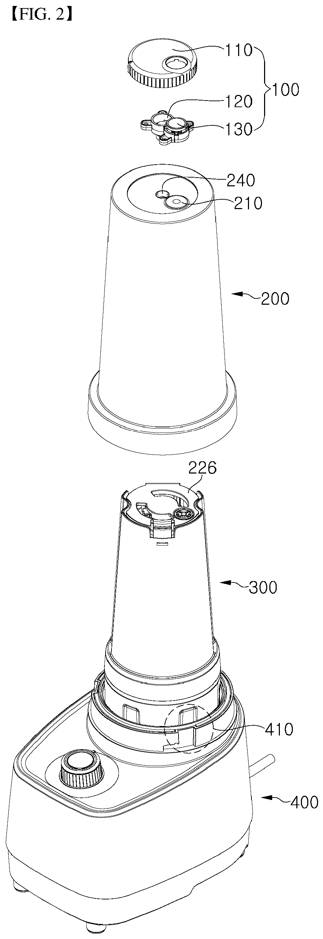

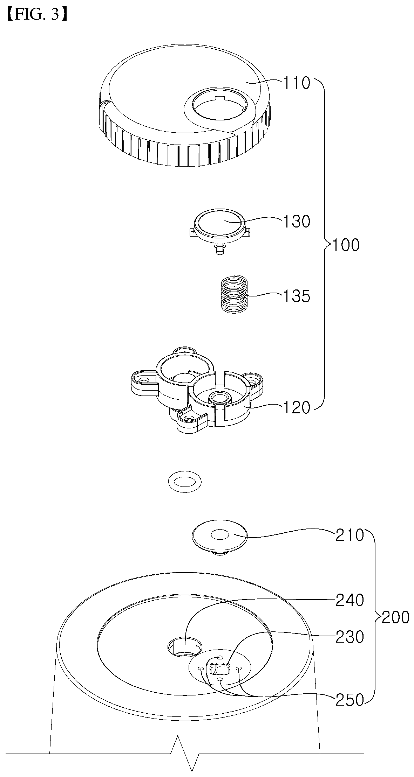

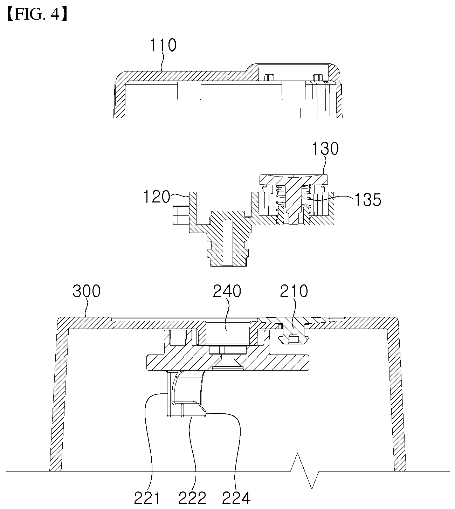

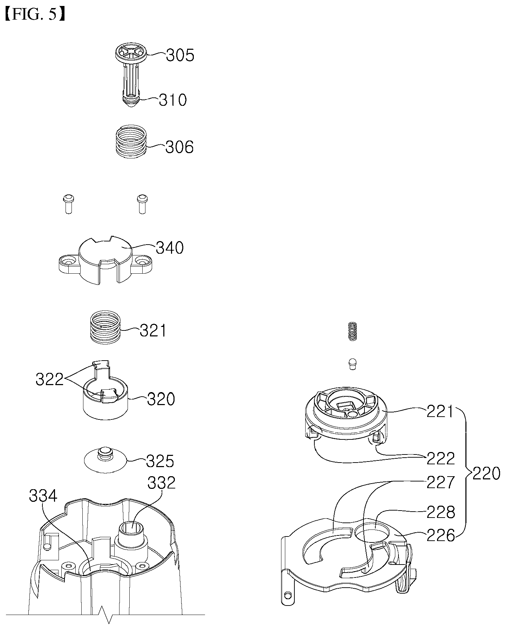

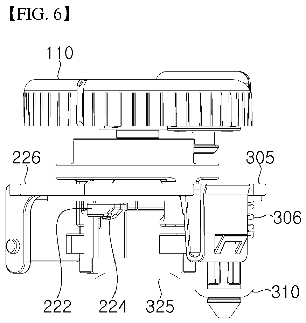

Referring to FIG. 1 to FIG. 10, a vacuum blender 10 according to one embodiment of the present disclosure includes all or some of the following components: an operation unit 100, a soundproof cover 200, a container 300, and a main body 400.

In the detailed description of the present disclosure, a space inside the soundproof cover 200 is termed a first space and a space inside the container 300 is termed a second space.

The operation unit 100 includes a control knob 110, an upper module 120, a relief button 130, and an indicator 140.

The control knob 110 switches an inside of the soundproof cover 200 between a vacuum state and an atmospheric pressure state. The indicator 140 indicates which position the control knob 110 is in.

The upper module 120 transmits rotary motion of the control knob 110 to an upper movable portion 221. In addition, the upper module 120 is connected at a bottom thereof to an upper end of the upper movable portion 221. That is, the upper module 120 has an upper end connected to the control knob 110 to be rotatable in conjunction with the control knob 110, and has a lower end inserted into the soundproof cover 200 to transmit rotary motion thereof to the upper movable portion 221. For example, when the control knob 110 is rotated clockwise, the upper movable portion 221 is rotated in conjunction with the control knob 110 by receiving rotary motion from the control knob 110.

The relief button 130 relieves a vacuum in the soundproof cover 200. For example, when a user activates the relief button 130, the relief button 130 may relieve the vacuum in the soundproof cover 200 based on the position of the control knob 110. In addition, the relief button 130 includes a relief button spring 135. Next, a more detailed description will be given as to how the relief button 130 relieves the vacuum in the soundproof cover 200.

The relief button 130 may be moved between a position facing a soundproof cover packing 210 of the soundproof cover 200 and a position not facing the soundproof cover packing 210 by operation (for example, rotation) of the control knob 110.

For example, when the relief button 130 is in the position facing the soundproof cover packing 210, the soundproof cover packing 210 is moved downward and exposes a vent hole 250 in response to a user activating the relief button 130, whereby the inside of the soundproof cover 200 can be ventilated.

Conversely, when the relief button 130 is in the position not facing the soundproof cover packing 210, the soundproof cover packing 210 is not moved downward and the vent hole 250 is thus not exposed even when a user activates the relief button 130. Accordingly, the vacuum in the soundproof cover 200 is maintained. A lower end of the control knob 10 is coupled to the upper module 120, and the lower end of the upper module 120 is coupled to a lower module 220 through an upper module fastening hole 240. That is, one side of the control knob 110, that is, the upper module 120, is inserted into and coupled to the upper module fastening hole 240.

Although the operation unit 100 has been described as being of a rotary type, it should be understood that the present invention is not limited thereto and the operation unit 100 may be of a laterally sliding type. In addition, the lower end of the control knob 110 may be coupled to the lower module 220.

The soundproof cover 200 includes all or some of the following components: the soundproof cover packing 210, the lower module 220, a packing fastening hole 230, the upper module fastening hole 240, and the vent hole 250.

The soundproof cover packing 210 opens or closes the vent hole 250 formed at an upper end of the soundproof cover 200.

As mentioned in the description of the relief button 130, the soundproof cover packing 210 may be in a position facing the relief button 130 or in a position not facing the relief button 130.

The soundproof cover packing 210 is coupled to the packing fastening hole 230.

The lower module 220 includes the upper movable portion 221 and an upper base 226.

The upper movable portion 221 is rotated in conjunction with rotation of the control knob 110. To this end, the upper movable portion 221 may be integrally formed with the control knob 110. The upper movable portion 221 has a lower end coupled to the upper base 226 through a guide groove 227 of the upper base 226. Accordingly, the upper movable portion 221 may be moved along the guide groove 227 of the upper base 226. For example, when the control knob 110 is rotated clockwise, the upper movable portion 221 is rotated clockwise on the guide groove 227. Rotation of the upper movable portion 221 is transmitted to a valve support 320 described below. That is, rotary motion of the upper movable portion 221 is converted into vertical motion of the valve support 320.

In order to convert the rotary motion of the upper movable portion 221 into the vertical motion of the valve support 320, the upper movable portion 221 has a first protrusion 222 formed at the lower end thereof. That is, the first protrusion 222 protrudes in a perpendicular direction with respect to an axial direction of the upper movable portion 221.

In addition, the first protrusion 222 may have a first slope 224 in order to smoothly convert the rotary motion of the upper movable portion 221 into the vertical motion of the valve support 320.

When the upper movable portion 221 is rotated, the first protrusion 222 formed at the lower end of the upper movable portion 221 is also rotated. When the first protrusion 222 is rotated to a certain angle, the first protrusion 222 faces a second protrusion 322 formed at an outer edge of the valve support 320. Then, the first protrusion 222 pushes the second protrusion 322 upward with the first slope contacting a slope 324 formed on the second protrusion 322. Here, the slopes 224, 324 need to face each other in the form of a reverse fault in order to ensure that the first protrusion 222 pushes the second protrusion 322 upward. Although the first and second protrusions 222, 322 are described as having the respective slopes 224, 324, it should be understood that the present disclosure is not limited thereto and only one of the first and second protrusions 222, 322 may have a slope 224 or 324. Herein, the reverse fault refers to a fault in which a block above a fault plane is moved up relative to a block below the fault plane.

The upper base 226 is disposed at an upper end of the container 300 and is fastened to the upper movable portion 221. As described above, the upper base 226 has the guide groove 227 allowing the upper movable portion 221 to be movably fastened thereto. That is, since the upper movable portion 221 is fastened to the upper base 226 through the guide groove 227 of the upper base 226, rotary motion of the upper movable portion 221 is transmitted to the valve support 320 disposed at the lower end of the upper base 226.

Besides the guide groove 227, the upper base 226 has a relief valve hole 228 through which the relief valve 305 is exposed outside the container 300. A user may relieve a vacuum in the second space by pressing the release valve 305 exposed through the relief valve hole 228. That is, the vacuum in the second space inside the container 300 can be relieved by a user pressing the relief valve 305 with the upper base 226 coupled to the container 300.

The vent hole 250 is formed at the upper end of the soundproof cover 200 and is opened or closed by the soundproof cover packing 210.

The container 300 includes all or some of the following components: the relief valve 305, a container packing 310, the valve support 320, a container check valve 325, a first opening 332, a second opening 334, a holder 340, and a lid 350.

The relief valve 305 exposed through the upper base 226 is disposed at the upper end of the container. The relief valve 305 is moved downward by a user's pressing force and is moved upward by resilience of the first spring 306 upon removal of the user's pressing force.

The container packing 310 is disposed at a lower end of the relief valve 305. The container packing 310 maintains or relieves a vacuum inside the container 300 in response to vertical motion of the relief valve 305. For example, when the relief valve 305 is moved downward, air flows into a space between the relief valve 305 and the container packing 310, that is, into the first opening 332.

In the detailed description of the present disclosure, a lower position of the valve support 320, that is, a position in which the valve support 320 closes the second opening 334 using the container check valve 325, is defined as a first position, and an upper position of the valve support 320, that is, a position in which the container check valve 325 is spaced apart from the second opening 334, is defined as a second position. Here, a second spring 321 is disposed inside the valve support 320 in order to raise the valve support 320 from the first position to the second position. That is, the valve support 320 may be raised from the first position to the second position by resilience (or restoring force) of the second spring 321.

The valve support 320 opens or closes the container check valve 325, and is disposed at the upper end of the container 300. The valve support 320 is provided separately from the relief valve 305. The valve support 320 receives rotary motion of the control knob 110 via the upper movable portion 221. That is, rotary motion of the upper movable portion 221 is converted into vertical motion of the valve support 320. Accordingly, the valve support 320 opens or closes the second opening 334 using the container check valve 325 while moving up or down. For example, when the valve support 320 is moved down, the second spring 321 disposed inside the valve support 320 is compressed, causing the container check valve 325 to open the second opening 334. When a user rotates the upper movable portion 221 in a reverse direction, the upper movable portion 221 no longer pushes the valve support 320 upward, causing the valve support 320 to be moved down again by resilience of the second spring 321.

Here, the second spring 321 is disposed between the valve support 320 and the holder 340. When the valve support 320 is moved up toward the holder 340, the second spring 321 is compressed. When the valve support 320 is returned to an original position thereof, that is, is moved down by resilience of the second spring 321, the container check valve 325 closes the second opening 334.

The valve support 320 has a second protrusion 322 formed at an outer edge thereof and facing the first protrusion 222 of the upper movable portion 221. The second protrusion 322 may have a second slope 324. Here, the second slope 324 may correspond to the first slope 224. Specifically, the first slope 224 and the second slope 324 may face each other in the form of a reverse fault.

The holder 340 is disposed at the upper end of the container 300. For example, the holder 340 is coupled to the container 300 via a screw.

The container packing 310 opens or closes the first opening 332 of the container 300.

The container packing 310 closes the first opening 332 when there is no external force acting thereon, that is, in normal times.

The valve support 320 is disposed at the upper end of the container and is operatively connected to the upper end of the container check valve 325.

The valve support 320 includes the second spring 321 and allows the container check valve 325 to close the second opening 334 in normal times. For example, the valve support 320 closes the container 300 by allowing the container check valve 325 to close the second opening 334 using resilience of the second spring 321.

When the valve support 320 is pushed upward by the upper movable portion 221, the second spring 321 is compressed. When the second spring 321 is compressed, the container check valve 325 opens the second opening 334 of the container 300. That is, in normal times, when there is no external force applied to the valve support 320, the valve support 320 is maintained in the lower position by resilience of the second spring 321 to close the second opening 334, and, when external force is applied to the valve support 320, the second spring 321 is compressed and the valve support 320 is moved up to open the second opening 334.

The lid 350 includes a blade 352 and a blade shaft 354, and has one side connected to the container 300 and the other side connected to the main body 400.

The blade shaft 354 is mounted at a lower end of the blade 352 and is rotatably coupled to a clutch formed at an upper end of the main body 400.

Next, relation between rotary motion of the upper movable portion 221 and vertical motion of the valve support 320 will be described in detail.

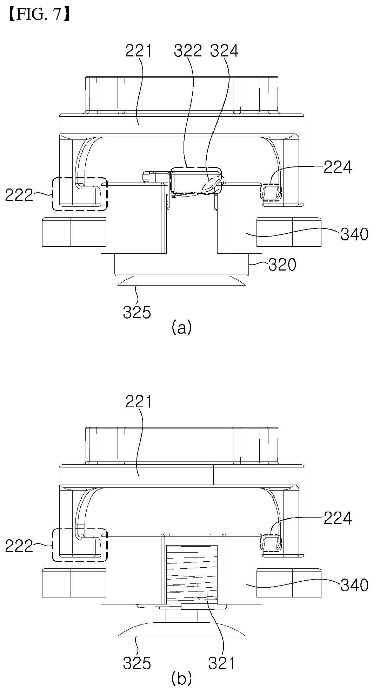

FIG. 7 is a view illustrating the valve support in the lower position according to one embodiment of the present disclosure.

FIG. 7(a) shows the valve support 320 in the lower position and FIG. 7(b) shows a position of the second spring 321 with the valve support 320 in the lower position.

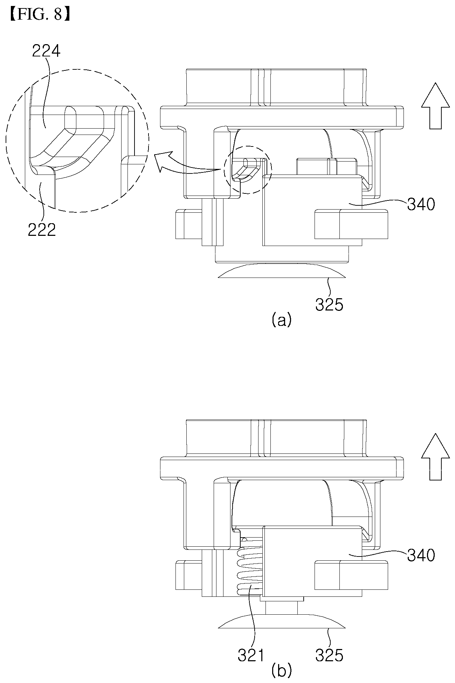

FIG. 8 is a view illustrating the valve support moved to the upper position by the upper movable portion according to one embodiment of the present disclosure.

FIG. 8(a) shows the valve support in the upper position and FIG. 8(b) shows the second spring 321 held in a compressed position with the valve support 320 in the upper position.

Comparing FIG. 7 with FIG. 8, when the upper movable portion 221 (see FIG. 7) is rotated, the upper movable portion 221 (see FIG. 8) pushes the valve support 320 upward, causing the second spring 321 to be compressed. Referring to the enlarged view of FIG. 8, when the upper movable portion 221 is rotated and the first protrusion 222 of the upper movable portion 221 pushes the second protrusion 322 of the valve support 320 upward, the second spring 321 is compressed. Here, the first protrusion 222 and the second protrusion 322 may include the slopes 224, 324 facing each other in the form of a reverse fault, respectively.

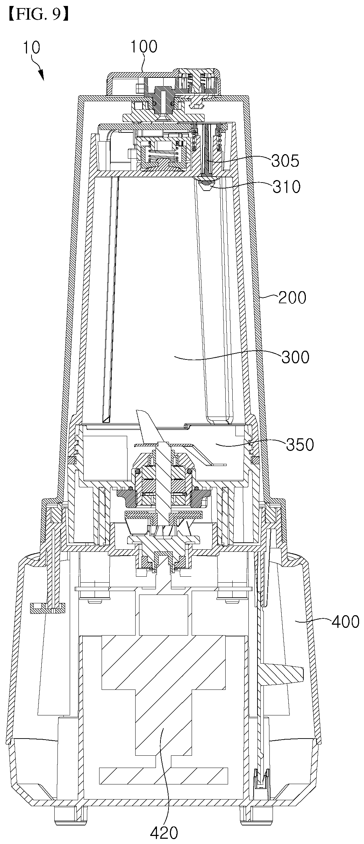

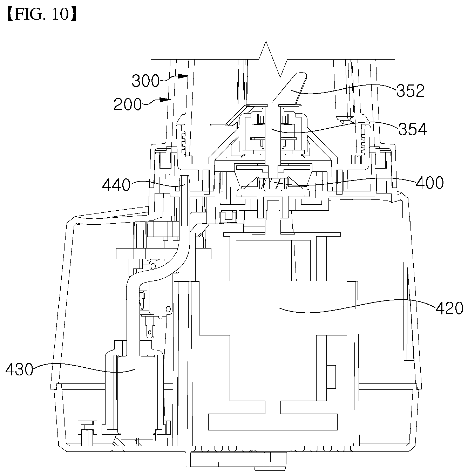

Referring to FIG. 9 and FIG. 10, the main body 400 includes all or some of the following components: a fastening portion 410, a driving motor 420, a vacuum motor 430, a vacuum port 440, and a clutch.

The fastening portion 410 is formed at the upper end of the main body 400 and is coupled to the soundproof cover 200. For example, the fastening portion 410 may be formed at the upper end of the main body 400 in the shape of a groove corresponding to a protrusion (not shown) of the soundproof cover 200 to be coupled to the soundproof cover 200.

The fastening portion 410 includes a soundproof cover recognition sensor (not shown). The soundproof cover recognition sensor detects coupling between the fastening portion 410 and the soundproof cover 200.

When the soundproof cover recognition sensor of the fastening portion 410 detects coupling between the main body 400 and the soundproof cover 200, the main body 400 supplies power to the driving motor 420 disposed inside the main body 400.

In the vacuum blender 10 according to one embodiment of the present disclosure, the driving motor 420 is not powered unless the main body 400 is coupled to the soundproof cover 200 even when the main body 400 is coupled to the container 300.

For example, the soundproof cover 200 includes a protrusion formed at a lower end thereof, and the main body 400 includes the soundproof cover recognition sensor, for example, a microswitch (not shown), to detect coupling between the main body 400 and the soundproof cover 200. Accordingly, when the microswitch (not shown) is pressed by the protrusion of the soundproof cover 200, a controller (not shown) determines that the soundproof cover 200 is coupled to the main body.

For example, the soundproof cover 200 includes a magnet formed at the lower end thereof, and the main body 400 includes the soundproof cover recognition sensor, for example, a reed sensor or a Hall sensor (not shown), to detect coupling between the main body 400 and the soundproof cover 200. Accordingly, when the soundproof cover recognition sensor detects contact with the magnet of the soundproof cover 200, the controller (not shown) determines that the soundproof cover 200 is coupled to the main body 400. When the soundproof cover 200 is coupled to the main body 400, power is supplied to the driving motor 420, which, in turn, rotates the blade 352.

Upon determining that the soundproof cover 200 is not coupled to the main body 400, the controller does not allow power supply to the driving motor 420 even when the main body 400 is coupled to the container 300. That is, when the soundproof cover 200 is not coupled to the main body 400, power is not supplied to the driving motor 420 and the blade 352 is thus not rotated.

The vacuum port 440 is connected to the vacuum motor 430 and is exposed at an upper portion of the main body 400. The vacuum port 440 allows the internal spaces of the container 300 and the soundproof cover 200, that is, the first space and the second space, to be evacuated therethrough.

In one embodiment, the vacuum blender may include at least two vacuum motors 430 to more rapidly evacuate the internal spaces of the container 300 and the soundproof cover 200, that is, in the first space and the second space.

The at least two vacuum motors 430 may be connected to a common vacuum port or respective vacuum ports to draw air from the first space and the second space.

Next, an evacuation mechanism of the vacuum blender 10 according to one embodiment of the present disclosure will be described.

When a user moves the control knob 110 to an evacuation position, the first protrusion 222 pushes the valve support 320 upward. When the valve support 320 is pushed upward, the container check valve 325 operatively connected to the valve support 320 opens the second opening 334. That is, the second space, that is, the internal space of the container 300, communicates with the first space, that is, the internal space of the soundproof cover 200. Then, the vacuum motor 430 is operated to evacuate both the first space and the second space. Since the relief button 130 does not face the soundproof cover packing 210 when the control knob 110 is in the evacuation position, the internal space of the soundproof cover 200, that is, the first space, is not ventilated even when the user presses the relief button 130.

Then, when the user moves the control knob 110 to a ventilation position, the first protrusion 222 of the lower module 220 no longer pushes the valve support 320. Accordingly, the valve support 320 is moved downward by resilience of the second spring 321, causing the container check valve 325 to close the second opening 334. That is, the second space no longer communicates with the first space and thus the vacuum in the second space is maintained.

When the user activates the relief button 130, the soundproof cover packing 210 is moved downward to relieve the vacuum in the first space. However, since the second space does not communicate with the first space, the vacuum in the second space is maintained. More specifically, since the relief button 130 faces the soundproof cover packing 210 when the control knob 110 is in the ventilation position, the vent hole 250 of the soundproof cover packing 210 is opened by the user pressing the relief button 130, whereby the vacuum in the internal space of the soundproof cover 200, that is, the first space, is relieved. When the vacuum in the first space is relieved, the user can easily remove the soundproof cover 200 while maintaining the vacuum inside the container 300.

If the user wants to relieve the vacuum in the internal space of the container 300, that is, the second space, the user presses the relief valve 305 to move the container packing 310 downward. When the container packing 310 is moved downward, the first opening 332 is exposed to relieve the vacuum in the internal space of the container 300, that is, the second space.

In one embodiment, the user may select a manual blending mode as an operating mode of the controller. In the manual blending mode, the vacuum blender 10 processes food without evacuating the first space and the second space.

When the vacuum blender 10 completes food processing, the user removes the soundproof cover 200 from the main body 400. When the user removes the soundproof cover 200 from the main body 400, the main body 400 shuts off power supply to the driving motor 420.

In one embodiment, the main body 400 may further include a vacuum hose (not shown).

The vacuum hose is connected to the vacuum port 440, such that a user can evacuate a separate container apart from the container 300 using the vacuum hose. After connecting the vacuum hose to the vacuum port, the user may select a vacuum control mode, for example, a vacuum blending (or blending under vacuum) mode, as the operating mode of the controller. Here, the vacuum control mode refers to a mode in which the vacuum blender is activated to be used anytime without coupling the soundproof cover to the main body. Accordingly, the user can evacuate the separate container using the vacuum hose.

The vacuum hose is connected to the vacuum port 440. Next, a mechanism for evacuating a separate container apart from the container 300 using the vacuum hose will be described.

With the vacuum hose, the vacuum blender according to the present disclosure can evacuate a separate container apart from the container 300.

After connecting the vacuum hose to the vacuum port, a user selects the vacuum control mode, for example, the vacuum blending (or blending under vacuum) mode as the operating mode of the controller.

Here, the vacuum control mode refers to a mode in which the vacuum blender is activated to be used anytime without coupling the soundproof cover to the main body. Accordingly, the user can evacuate the separate container using the vacuum hose.

The vacuum hose includes a backflow prevention module (not shown) disposed at an end thereof connected to the vacuum port.

For example, the backflow prevention module is provided with a separate space in which a vent hole and a check valve are disposed. When there is foreign matter flowing through the backflow prevention module, the check valve closes the vent hole to stop evacuation of the separate container. When there is no foreign matter in the backflow prevention module, the check valve opens the vent hole.

In one embodiment, a filter is detachably disposed inside the separate space of the backflow prevention module to filter out foreign matter flowing through the backflow prevention module such that air free from foreign matter passes through the vent hole.

Thus, the backflow prevention module serves to prevent foreign matter generated in the separate container from flowing back into the vacuum port through the vacuum hose.

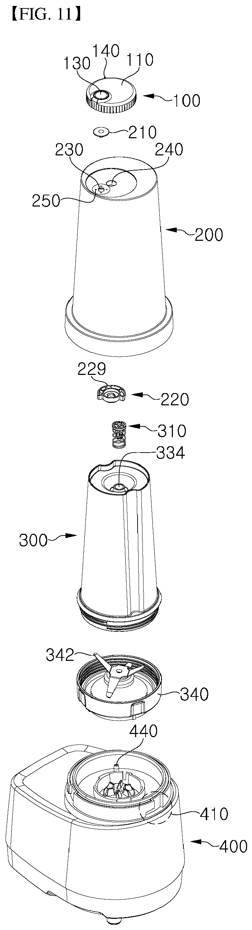

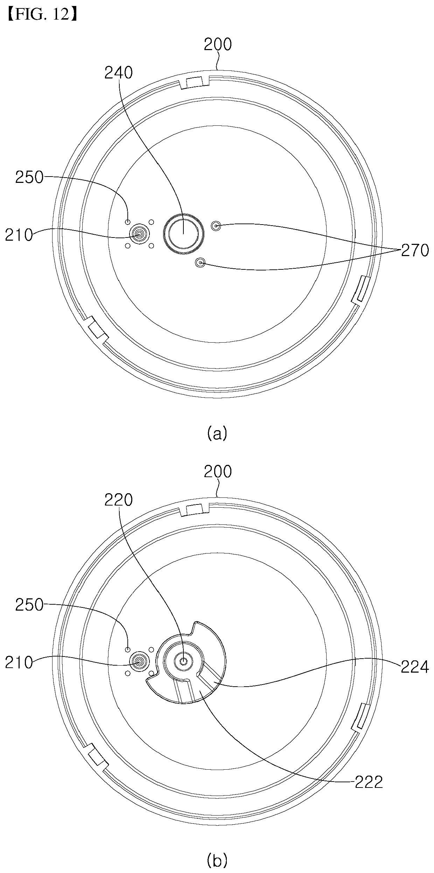

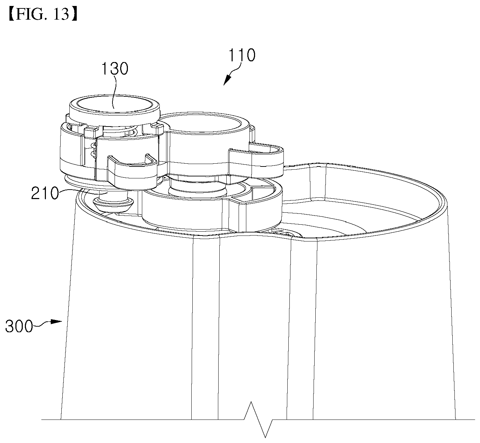

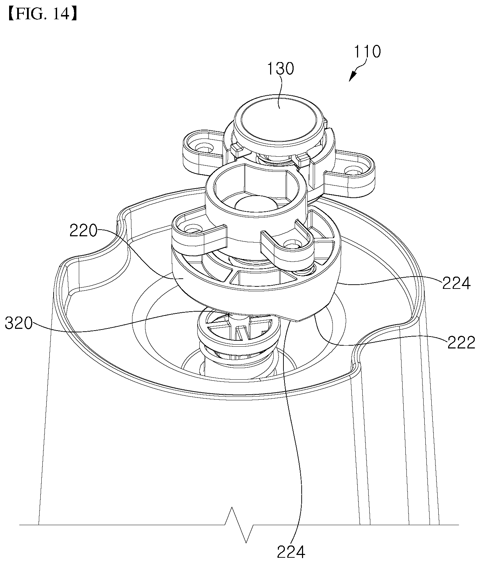

Next, a vacuum blender according to another embodiment of the present disclosure will be described with reference to FIG. 11 to FIG. 14. Detailed description of the same components as in the above embodiment will be omitted.

In this embodiment, the soundproof cover 200 includes all or some of the following components: a first packing 210, a lower module 220, a packing fastening hole 230, an upper module fastening hole 240, a vent hole 250, and a stopper hole 270.

The lower module 220 includes all or some of the following components: a first protrusion 222, a first slope 224, and a stopper 229. The lower module 220 is coupled to the lower end of the operation unit 100 through the upper module fastening hole 240 using, for example, a screw. The first protrusion 222 and the first slope 224 are formed at the lower end of the lower module 220 and are coupled to the upper end of the valve support 320.

The stopper 229 is coupled to the stopper hole 270 and is disposed at the upper end of the lower module 220. The stopper 229 serves to hold the control knob 110 in position. For example, when a user moves the control knob 110 in the evacuation position, the stopper 229 holds the control knob 110 to prevent the control knob 110 from moving on its own to the ventilation position.

Although some embodiments have been described herein, it should be understood that various modifications, changes, and alterations can be made by those skilled in the art without departing from the spirit and scope of the invention. Therefore, the foregoing embodiments are provided for illustration only and are not to be in any way construed as limiting the technical idea of the present invention. The scope of the present invention should be defined by the appended claims and equivalents thereto.

## Claims

1. A vacuum blender comprising:
a soundproof cover defining a first space therein and comprising a soundproof cover packing switching the first space between a vacuum state and an atmospheric pressure state;
a container mounted in the first space, defining a second space for processing ingredients therein, and having at least one opening formed through an upper end thereof and allowing passage of air therethrough;
an operation unit comprising a control knob movable between an evacuation position and a ventilation position and a relief button pressing the soundproof cover packing; and
a main body coupled to the soundproof cover and comprising a vacuum motor evacuating the first space or the second space,
wherein the container comprises a relief valve opening or closing one of the at least one opening in response to external force applied by a user and a container check valve opening or closing the other opening in response to rotation of the control knob.

2. The vacuum blender according to claim 1, wherein the at least one opening comprise a first opening operatively connected to the relief valve and a second opening operatively connected to the container check valve, and the relief valve comprises a first spring compressed by external force applied by the user, whereby the relief valve opens the first opening upon application of external force by the user and closes the first opening in response to resilience of the first spring upon removal of the external force.

3. The vacuum blender according to claim 1, wherein the at least one opening comprise a first opening operatively connected to the relief valve and a second opening operatively connected to the container check valve, and the container comprises: an upper movable portion rotated in conjunction with rotation of the control knob; and a valve support vertically moved in response to rotation of the upper movable portion such that the container check valve opens or closes the second opening.

4. The vacuum blender according to claim 3, wherein the upper movable portion comprises a first protrusion formed at an outer edge thereof, the valve support comprises a second protrusion formed at an outer edge thereof, and the first protrusion raises the valve support by pushing the second protrusion upward upon rotation of the upper movable portion.

5. The vacuum blender according to claim 4, wherein at least one of the first protrusion and the second protrusion has a slope formed in a direction in which the first protrusion is moved up.

6. The vacuum blender according to claim 4, wherein the first protrusion has a first slope formed in a direction in which the first protrusion pushes up the second protrusion.

7. The vacuum blender according to claim 6, wherein the second protrusion has a second slope formed in a direction in which the second protrusion is pushed up by the first protrusion.

8. The vacuum blender according to claim 7, wherein the first slope and the second slope face each other in the form of a reverse fault.

9. The vacuum blender according to claim 3, wherein the upper movable portion is integrally formed with the control knob.

10. The vacuum blender according to claim 1, wherein, when the soundproof cover is coupled to the main body, the main body supplies power to a driving motor mounted therein and, when the soundproof cover is not coupled to the main body, the main body does not supply power to the driving motor.

11. A vacuum blender comprising:
a soundproof cover defining a first space therein and comprising a soundproof cover packing switching the first space between a vacuum state and an atmospheric pressure state;
a container mounted in the first space and defining a second space for processing ingredients therein;
an operation unit comprising a control knob movable between an evacuation position and a ventilation position and a relief button pressing the soundproof cover packing; and
a main body coupled to the soundproof cover and comprising a vacuum motor evacuating the first space or the second space.

12. The vacuum blender according to claim 11, wherein, when a user activates the relief button with the control knob in the ventilation position, a vacuum in the first space is relieved and, when the user activates the relief button with the control knob in the evacuation position, the vacuum in the first space is not relieved.

13. The vacuum blender according to claim 12, wherein the container comprises a container packing evacuating or ventilating the second space.

14. The vacuum blender according to claim 13, wherein the container comprises a valve support comprising a spring disposed at an upper end thereof, the valve support being movable up or down.

15. The vacuum blender according to claim 14, wherein the container packing closes an opening formed through the container in response to resilience of the spring.

16. The vacuum blender according to claim 14, wherein the soundproof cover comprises a lower module coupled to a lower end of the control knob, and the lower module pushes the valve support with the control knob in the evacuation position and does not push the valve support with the control knob in the ventilation position.

17. The vacuum blender according to claim 16, wherein the lower module comprises a first slope and a first protrusion formed at lower end thereof, the lower module pushing the valve support with the first slope contacting the valve support.

18. The vacuum blender according to claim 16, wherein the lower module comprises a stopper formed at an upper end thereof to hold the control knob in position.

19. The vacuum blender according to claim 11, wherein the operation unit comprises an indicator indicating which position the control knob is in.

20. The vacuum blender according to claim 20, wherein, when the soundproof cover is coupled to the main body, the main body supplies power to a driving motor mounted therein, and, when the soundproof cover is not coupled, the main body does not supply power to the driving motor.
